# EUROPEAN PATENT APPLICATION

(11) **EP 1 501 174 A1**
(43) Date of publication of application: **26.01.2005**
(21) Application number: 03725709.4
(22) Date of filing: 30.04.2003
(51) Int. Cl.: H02K 53/00, H02K 21/24, F16H 49/00

(54) **POWER GENERATOR AND TORQUE AMPLIFIER**

(30) Priority: 01.05.2002 JP 2002129892
(71) Applicant: Ogoshi, Makoto, Onga-gun, Fukuoka 811 4341 (JP)
(72) Inventor: Ogoshi, Makoto, Onga-gun, Fukuoka 811 4341 (JP)
(74) Representative: Skone James, Robert Edmund
(86) International application number: PCT/JP2003/005519
(87) International publication number: WO 2003/094329

(57) **Abstract**

Disclosed is a power generator adapted to provide an electrical power greater than an input power by means of a permanent magnet. The power generator 10 comprises a rotatable rotor 12, a plurality of permanent magnets 16, and a plurality of coreless coils 18. The rotor 12 has a surface including an annular zone 14 formed around the rotational axis 13 thereof. The permanent magnets 16 are disposed along the annular zone 14 at constant intervals in the circumferential direction of the rotor 12 to form an annular array, while uniformly orienting their polarities in a direction orthogonal to the annular zone 14. The coreless coils 18 are supported by a stationary member 11 and disposed along the annular zone to form an annular array, while allowing the respective axes 19 of the coils to intersect with the annular zone 14. The permanent magnets 16 are moved along the coreless coils 18 in conjunction with the rotation of the rotor 12 induced by a rotational force supplied through a center shaft 22 from a torque amplifier 20 disposed below the rotor 12, so as to obtain an output power from the coreless coils 18.

## Description

### TECHNICAL FIELD

The present invention relates to a power generator using a permanent magnet, and a torque amplifier suitable for use in driving the power generator.

### BACKGROUND ART

There has been known a torque multiplier or amplifier adapted, particularly, to obtain an output power greater than an external input power by means of a permanent magnet, such as a magnetic rotation apparatus disclosed in Japanese Patent Laid-Open Publication No. 09-285103. This magnetic rotation apparatus utilizes a repulsion force between a permanent magnet and an electromagnet or a repulsion force between a plurality of permanent magnets.

There has also been known a power generator using a neodymium-based (Nd-Fe-Bo) magnet, such as a power generator disclosed in Japanese Patent Laid-Open Publication No. 10-191623, which is designed to lead a magnetic flux from respective poles of a rod-shaped neodymium-based magnet to a plurality of ferromagnetic members disposed in opposed relation to each other to form a plurality of magnetic gaps intermittently in the circumferential direction of the magnet, and obtain an electrical power from a terminal of a stator coil disposed across the magnetic gaps.

While the aforementioned magnetic rotation apparatus can purportedly provide an output power greater than an input power, it has poor practicality because the difference between the output and input powers or a torque amplification coefficient is too small for an increased size of the apparatus caused by the need for intricately combining a member of permanent magnets. Moreover, the magnetic rotation apparatus is not designed to generate electrical power from an electromagnet, and thereby a power generator has to be connected to a driven rotor of the magnetic rotation apparatus to generate electrical power.

The aforementioned power generator using a neodymium-based magnet is designed to lead a magnetic flux through the ferromagnetic members. This structure inevitably causes deterioration in magnetic force at the magnetic gaps for receiving the coil therein, and involves the risk of leakage of the magnetic flux from the ferromagnetic members if another magnetic member is located adjacent to the ferromagnetic members. Moreover, the power generator utilizing a magnetic flux from a single rod-shaped magnet has limitations in amplifying an output power.

### DISCLOSURE OF INVENTION

In view of the above conventional problems, it is therefore an object of the present invention to provide a torque amplifier having a simple structure and a large torque amplification coefficient. It is another object of the present invention to provide a power generator capable of efficiently obtaining an output power relative to an input power.

In order to achieve the above objects, the present invention provides a power generator having a rotatable rotor adapted to be rotatively driven by an external force; a plurality of permanent magnets disposed on the rotor, along an annular zone formed parallel to either the rotational plane or the rotational axis of the rotor and around the rotational axis, at constant intervals in the circumferential direction to form an annular array, the polarities of the permanent magnets being oriented in the same direction which is orthogonal to the annular zone; and a plurality of coreless coils supported by a stationary member and disposed along the annular zone to form an annular array such that the axes of said coils intersect with the annular zone, wherein the annular zone in said rotor is formed of a nonmagnetic material; and each of the coreless coils consists of a pair of shunt coils disposed such that the pair of shunt coils sandwich the orbital plane of the permanent magnets formed by the rotation of the rotor therebetween, from the both sides of the polar direction with a gap, the pair of shunt coils having the same turn direction.

Further, in order to achieve the above objects, the present invention provides a torque amplifier having a rotatably driven rotor; a plurality of driven permanent magnets disposed on the driven rotor, along an annular zone formed parallel to either the rotational plane or the rotational axis of the rotor and around the rotational axis, at constant intervals in the circumferential direction to form an annular array, the polarities of the permanent magnets being oriented in the same direction which is orthogonal to the annular zone; a group of magnet wheels including a plurality sets of magnet wheels disposed along the circumferential direction of the driven rotor, each of the sets of magnet wheels is a pair of magnet wheels rotatable in the rotation direction of the driven permanent magnets and disposed such that the pair of magnet wheels sandwich the orbital plane of the driven permanent magnets formed by the rotation of the driven rotor therebetween, from the both sides of the polar direction with a gap; and a driving source for rotatively driving the magnet wheels of the magnet wheel group in a synchronous manner, wherein: the annular zone in the driven rotor is formed of a nonmagnetic material; and the magnet wheel includes a rotating member rotatable around a rotational axis parallel to the annular zone of the driven rotor and orthogonal to the circumferential direction of the annular zone, and a plurality of driving permanent magnets attached to the outer periphery of the rotating member at even intervals in the rotation direction of the rotating member and such that the polarities thereof have the same direction relative to the rotational axis of the rotating member, and the magnet wheel is disposed such that the driving permanent magnets and the driven permanent magnets have the same polarity at the opposing surfaces.

Furthermore, in order to achieve the above objects, the present invention provides a power generator comprising an input power shaft provided integrally and coaxially with the aforementioned rotor, and coupled to an output power shaft rotatable coaxially with the driven rotor of the aforementioned torque amplifier.

### BRIEF DESCRIPTION OF DRAWINGS

FIG. 1 is an exploded perspective view showing a power generator according to a first embodiment of the present invention.
FIG. 2 is an enlarged sectional view taken along the line II-II in FIG. 1.
FIG. 3 is a block diagram showing an electrical system of the power generator.
FIG. 4 is an enlarged sectional view taken along the line IV-IV in FIG. 1.
FIG. 5 is a schematic sectional view showing a power generator according to a second embodiment of the present invention.
FIG. 6 is an exploded perspective view showing a power generator according to a third embodiment of the present invention.
FIG. 7 is a block diagram showing an electrical system of a power generator according to a fourth embodiment of the present invention.
FIG. 8 is a diagram showing an output waveform of the power generator according to the fourth embodiment.
FIG. 9 is a perspective view showing a power generator according to a fifth embodiment of the present invention.
FIG. 10 is a perspective view showing the substantial part of a power generator according to a sixth embodiment of the present invention.
FIG. 11 is an enlarged sectional view taken along the line XI-XI in FIG. 10.
FIG. 12 is a perspective view showing the substantial part of a power generator according to a seventh embodiment of the present invention.
FIG. 13 is a perspective view showing the substantial part of a power generator according to an eighth embodiment of the present invention.
FIG. 14 is a perspective view showing a power generator according to a ninth embodiment of the present invention.
FIG. 15 is a fragmentary perspective view showing the substantial part of a power generator according to a tenth embodiment of the present invention.
FIG. 16 is a block diagram showing another connection mode of shunt coils in a power generator of the present invention.
FIGS. 17(A) and 17(B) are schematic fragmentary top plan views showing other examples of the shapes of a permanent magnet and a coreless coil.

### BEST MODE FOR CARRYING OUT THE INVENTION

With reference to the drawings, an embodiment of the present invention will now be described in detail.

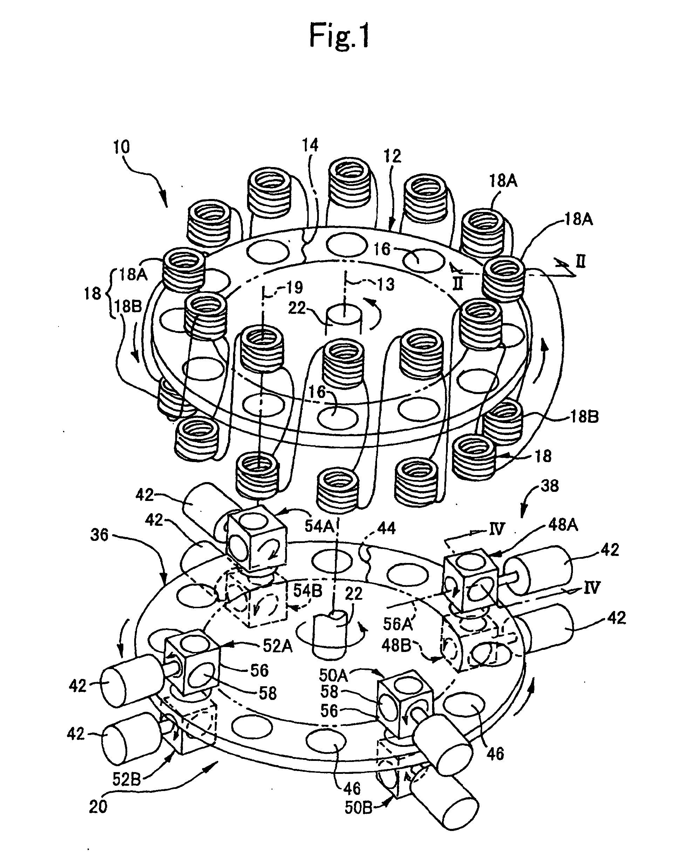

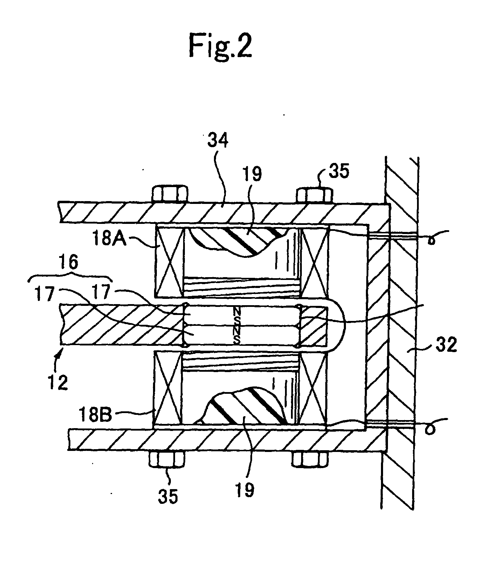

As shown in FIG. 1, a power generator 10 according to a first embodiment of the present invention comprises a rotor 12 rotatably supported by a stationary member 11 (see FIG. 2) in such a manner as to be rotatively driven by an external force, a plurality of permanent magnets 19 disposed along an annular zone 14, which is defined on a surface of the rotor 12 and around the rotational axis 13 of the rotor 12, at constant intervals in the circumferential direction of the rotor 12 to form an annular array, while uniformly orienting their polarities in a direction orthogonal to said annular zone or in the thickness direction of the rotor 12, and a plurality of coreless coils 18 supported by the stationary member 11 and disposed along the annular zone 14 to form an annular array, while allowing the respective axes 19 of the coils 18 to intersect with the annular zone 14. The permanent magnets 16 are moved along the coreless coils 18 in conjunction with the rotation of the rotor 12 induced by a rotational force supplied through a center shaft 22 from a torque amplifier 20 disposed below the rotor 12, so as to obtain an output power from the coreless coils 18.

The permanent magnets 16 has a disc shape, and the pitch Pm of the permanent magnets 16 along the circumferential direction of the annular zone 14 is set to satisfy the following relation with the outer diameter Dm of each of the permanent magnets 16 along the circumferential direction (Dm is substantially equal to the diameter of the disc): Pm ≥ 2 Dm. Each of the coreless coils 12 has a circular ring shape, and the outer diameter Dc of each of the coreless coils 18 along the circumferential direction of the annular zone 14 is set to be equal to the outer diameter Dm of each of the permanent magnets 16. Further, the pitch Pc of the coreless coils 18 along the circumferential direction is set at a value of 1 to 1.4 times of the outer diameter Dc, preferably 1.1 to 1.3 times of the outer diameter Dc, more preferably 1.2 times of the outer diameter Dc.

In the rotor 12, at least the annular zone 14 is formed of a nonmagnetic material, such as aluminum plate. Each of the coreless coils 18 is composed of a pair of shunt coils 18A, 18B. The pair of shunt coils 18A, 18B have the same winding or turn direction. Further, as shown in FIG. 2, the pair of shunt coils 18A, 18B are aligned along the polar direction of the permanent magnets 16 in such a manner as to sandwich therebetween the orbital plane of the permanent magnets 16 rotated in conjunction with the rotation of the rotor 12, from the opposite sides of the orbital plane while leaving a gap between the orbital plane and each of the shunt coils 18A, 18B.

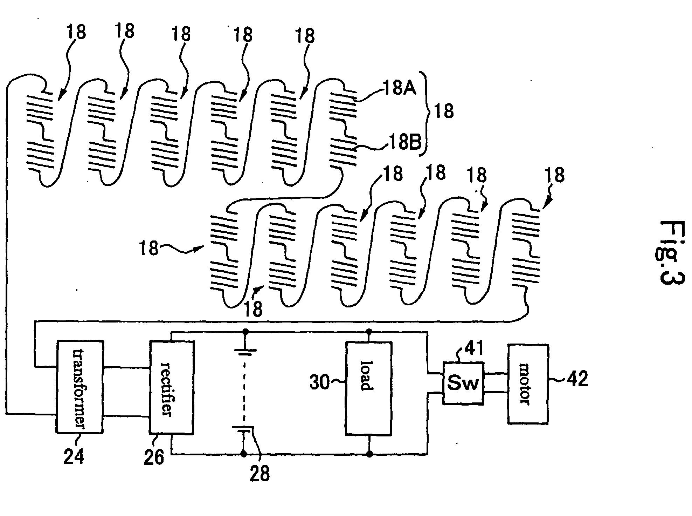

The shunt coils 18A, 18B in each of the coreless coils 18 are connected in series with one another, and the coreless coils 18 are connected in series with each other as shown in FIGS. 1 and 3.

The output terminal of the coreless coils 18 is connected to a rectifier 26 through a transformer 24. An alternating current output from the coreless coils 18 is transformed into an optimal voltage through the transformer 24, and then rectified to a direct current through the rectifier 26.

The rectifier 26 is connected in parallel with a battery 28, a load 30 and a motor 42 (described in detail later). The motor 42 is connected to the rectifier 26 through a switch 41.

As enlargedly shown in FIG. 2, each of the permanent magnets 16 is composed of two superimposed magnets 17, 17 having a circular plate shape with the same size. The permanent magnet 16 is fixedly attached to the rotor 12 by press-fitting it into a through-hole 32 which is formed in the annular zone 14 of the rotor 12 in advance to penetrate the rotor 12 in its thickness direction, and then caulking the outer peripheral edge of the through-hole 32.

The pair of shunt coils 18A, 18B in each of the coreless coils 18 are fixedly fastened, respectively, to the upper inner and lower inner surfaces of an annular-shaped frame 34 having an outer peripheral wall with a reverse C-shaped section, using bolts 35 as shown in FIG. 2, while leaving a gap between the shunt coils 18A, 18B so as to allow the annular zone 14 of the rotor 12 to be rotatively passed therethrough.

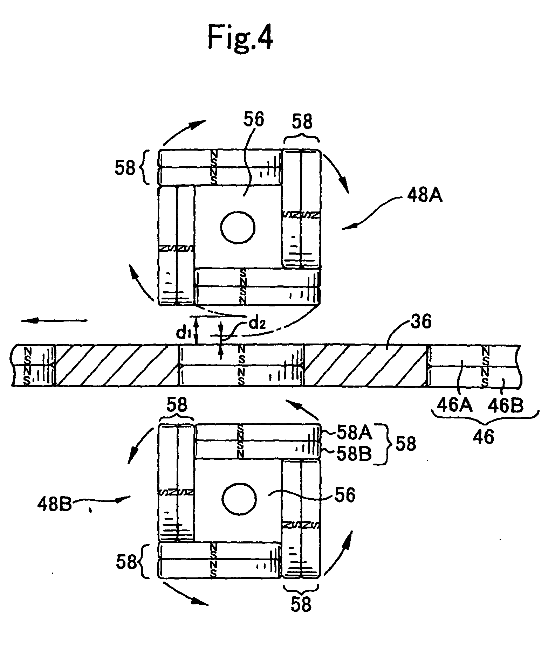

The term "coreless coil" herein means a coil devoid of a core formed of a magnetic material, such as an iron core. Thus, as shown in FIG. 4, a nonmagnetic core 19 made, for example, of hard resin, may be attached to the coreless coil 18 to stabilize the winding shape of the coreless coil 18.

The annular-shaped frame 34 is fixedly attached to the stationary member 11 serving as a part of a frame. The reference numeral 22 in FIG. 1 indicates a center shaft integrally attached to the rotor 12 in such a manner as to be aligned with the rotational axis 13 of the rotor 12.

The torque amplifier 20 for rotatively driving the rotor 12 through the center shaft 22 will be described below.

The torque amplifier 20 comprises a circular driven rotor 36 coupled to the center shaft 22 and adapted to be rotatively driven coaxially and integrally with the rotor 12, and a magnet wheel group 38 for rotatively driving the driven rotor 36 by means of a repulsion force of a permanent magnet, and eight motors 42 for synchronously driving eight magnetic wheels 40 comprising the magnet wheel group 38.

The driven rotor 36 has a surface including an annular zone 44 formed along the outer periphery of the driven rotor 36 and around the rotational axis of the driven rotor 36 (center shaft 22), and a plurality of driven permanent magnets 46 disposed along the annular zone at constant intervals in the circumferential direction of the driven rotor 36 to form an annular array, while uniformly orienting their polarities in a direction orthogonal to the annular zone 44 or in the thickness direction of the driven rotor 36.

The driven permanent magnets 46 has a plate shape with the same size as that of each of after-mentioned driving permanent magnets 58. In the annular zone 44, the interval or pitch between the adjacent driven permanent magnets 46 along the circumferential direction of the driven rotor 36 is set at a value of 1.0 to 1.4 times, preferably 1.1 to 1.3 times, more preferably 1.2 times, of the outer diameter of each of the driven permanent magnets 46 along the circumferential direction.

The annular zone 44 in the driven rotor 36 is formed of a nonmagnetic material. For example, the entire driven rotor 36 or only the annular zone 44 may be formed of an aluminum plate to allow the annular zone 44 to be nonmagnetic.

The magnet wheel group 38 is comprised of four pairs of upper and lower magnetic wheels 48A, 48B; 50A, 50B; 52A, 52B; 54A, 54B, and the four magnet wheel pairs are disposed along the outer periphery and the circumferential direction of the driven rotor 36 at equiangular intervals. Each of the magnet wheel pairs or sets are designed to be rotatable in the rotation direction of the driven permanent magnets 46 and aligned along the polar direction of the driven permanent magnets 46 in such a manner as to sandwich therebetween the orbital plane of the driven permanent magnets 46 rotated in conjunction with the rotation of the driven rotor 36, from the opposite sides of the orbital plane while leaving a gap between the orbital plane and each of the magnet wheels (see FIG. 4). The motors 42 are coupled, respectively, to the eight magnet wheels to rotate the magnet wheels in the above rotation direction.

The magnet wheels 48A to 54B includes a rotating member 56 parallel to the annular zone 44 of the driven rotor 36 and rotatable around a rotational axis 56A orthogonal to the circumferential direction of the annular zone 44, and four driving permanent magnets 58 attached to the outer periphery of the rotating member 56 at even intervals in the rotation direction of the rotating member 56 while uniformly orienting their polarities relative to the rotational axis of the rotating member 56. Each of the driving permanent magnets 58 is arranged to have the same polarity as that of each of the driven permanent magnets 46 to be opposed thereto.

As particularly shown in FIG. 4, each of the driving permanent magnets 58 is formed of a plate-shaped magnet disposed in the outer periphery of the rotating member 56 point-symmetrically around the rotational axis 56A of the rotating member 56, and the plate-shaped magnet is attached to the rotating member 56 in such a manner that the closest distance d1 between the leading edge of the plate-shaped magnet in the rotation direction of the rotating member 56 and the orbital plane of the driven permanent magnets 46 is greater than the closest distance d2 between the trailing edge of the plate-shaped magnet in the rotation direction and the orbital plane.

As with the permanent magnet 16 attached to the rotor 12, each of the driven permanent magnets 46 and the driving permanent magnets 58 is composed of two circular plate-shaped magnets 46A, 46B; 58A, 58B, which are magnetically attached together in a superimposed manner.

A power generation process using the above power generator 10 will be described below.

The battery 28 is charged in advance. When the switch 41 is turned on to activate the motors 42, the motors 42 rotatively drive the corresponding magnet wheels 48A to 54B in respective directions as indicated by the arrows in FIG. 1.

This operation will be described in more detail by taking the magnet wheels 48A, 48b as an example. As shown in FIG. 4, each of the driving permanent magnets 58 of the magnet wheel 48A disposed above the driven rotor 36 is arranged to have the N-pole located outside, and each of the driving permanent magnets 58 of the magnet wheel 48B disposed below the driven rotor 36 is arranged to have the S-pole located outside. On the other hand, each of the driven permanent magnets 46 of the driven rotor 36 is arranged to have the N-pole on the upper side and the S-pole on the lower side.

Thus, when the upper magnet wheel 48A and the lower magnet wheel 48B are rotated clockwise and counterclockwise, respectively, as indicated by the arrows in FIG. 4, the driven permanent magnet 46 is pushed leftward in FIG. 4 by the repulsion force between the N-pole of the driven permanent magnet 46 and the N-pole of the driving permanent magnet 58 in the upper magnet wheel 48A getting close to the driven permanent magnet 46.

In the same manner, the driven permanent magnet 46 is also pushed leftward in FIG. 4 by the repulsion force between the S-pole of the driven permanent magnet 46 and the S-pole of the driving permanent magnet 58 in the lower magnet wheel 48B.

As mentioned above, each of the driving permanent magnets 58 in the magnet wheels 48A, 48B is arranged such that the closest distance d1 between the leading edge of the driving permanent magnet 58 in the rotation direction and the surface of the driven permanent magnet 46 is greater than the closest distance d2 between the trailing edge of the driving permanent magnet 58 and the surface of the driven permanent magnet 46. Thus, during the above operation, the repulsion force is increased on the side of the trailing edge of the driving permanent magnet 58 in the rotation direction to prevent the driven permanent magnet 46 from being moved rightward in FIG. 4 by the repulsion force between the permanent magnets induced by the rotations of the magnet wheels 48A and 48B.

The driven rotor 36 is integrally coupled to the rotor 12 through the center shaft 22. Thus, even if it is attempted to drive the driven rotor 36 in conjunction with the rotations of the magnet wheels 48A to 54B, the driven rotor 36 cannot follow the rotations of the magnet wheels 48A to 54B immediately after startup of the motors 42 due to an insufficient magnetic repulsion force relative to a large rotational resistance of the rotor 12 and the driven rotor 36.

However, the rotation speed of the driven rotor 36 is gradually increased by the repulsion force from the driving permanent magnets 58 in conjunction with the rotations of the magnet wheels 48A to 54B, and the rotation speed of the magnet wheels is synchronized with the rotation speed of the driven rotor 36 after a given time from the startup of the motors 42.

During this process, when the driving permanent magnet 58 located closest to the driven rotor 36 is further rotated away from the driven rotor 36, and the subsequent driving permanent magnet 58 is moved closer to the driven rotor 36, it is likely that the driven rotor 36 is undesirably driven in the opposite direction or rightward in FIG. 4 by a magnetic repulsion force to the driven permanent magnet 46.

In the torque amplifier 20 according to this embodiment, the interval or pitch between the adjacent driven permanent magnets 46 along the circumferential direction of the driven rotor 36 is set at a value of 1.0 to 1.4 times, preferably 1.1 to 1.3 times, more preferably 1.2 times, of the outer diameter of each of the driven permanent magnets 46 along the circumferential direction. Thus, almost no repulsion force causing the reverse rotation of the driven rotor 36 is generated between the subsequent driven permanent magnet 46 and the driving permanent magnet 58.

In this manner, according to the driving permanent magnets 58 driven by the eight motors 42, the driven rotor 36 is rotated at a constant speed through the driven permanent magnets 46.

As above, the driven rotor 36 is driven by the magnetic repulsion force to the driven permanent magnets. Simultaneously, this repulsion force also acts to the driving permanent magnets 56, and each of the magnet wheels 48A to 54B receives the repulsion force in a direction accelerating the rotation thereof. Thus, after the driven rotor 36 gets into the constant-speed rotation, a required driving power for the motors 12 will be reduced as compared to that before the constant-speed rotation.

When the rotor 12 is rotated through the driven rotor 36 and the center shaft 22, the permanent magnets 11 are passed between the shunt coils 18A, 18B in the coreless coils 18 intermittently at a constant speed.

Thus, an alternating current having a frequency corresponding to the number of times that the permanent magnets 16 are passed between the pair of shunt coils 18A, 18B per second is generated at each of the shunt coil sets.

The pair of shunt coils 18A, 18B connected in series with one another and the entire coreless coils 18 connected in series with each other can provide a higher voltage in proportion to the total number of the shunt coils.

Further, the adjacent coreless coils 18 are spaced apart from one another at the interval as shown in FIG. 1, the interval or pitch is set at a value of 1.0 to 1.4 times, preferably 1.1 to 1.3 times, more preferably 1.2 times, of the outer diameter of each of the coreless coils along the circumferential direction of the annular zone 14. This prevents the permanent magnet 16 passed through one of the coreless coils 18 from receiving a rotational resistance due to a magnetic attraction and/or repulsion force arising from the change in magnetic flux caused by the adjacent coreless coil 18. The number of turns in the coreless coil may be adjusted to conform an output voltage to a target voltage, for example, of 100 V or 200 V, so as to eliminate the need for providing any transformer.

The coreless coils 18 literally devoid of a magnetic core, such as iron core, can prevent the occurrence of rotational resistance due to the magnetic attraction between such a magnetic core and each of the permanent magnets 16. In addition, any heat due to an eddy-current loss in the inside of the iron core or the like is never generated.

Generally, the performance of a neodymium-based magnet is sharply deteriorated at a temperature of 80°C or more. Thus, despite various countermeasures against heat, the deterioration in the neodymium-based magnet has not been suppressed because it is often the case that an electromagnetic coil for a motor or the like is rapidly heated up to a temperature greater than 100°C after startup of the motor.

While the driven rotor 36 in the torque amplifier 20 substantially corresponds to a rotor of a motor, no heat is generated in an electromagnetic coil because the driven rotor 36 is rotated only by the repulsion force between the permanent magnets, and the heat generation in the motors 42 has no adverse affect on the permanent magnets because the motors 42 are located away from the permanent magnets. Thus, the driven permanent magnets 46 and the driving permanent magnets 58 have no deterioration due to heat.

The alternating current generated in the above way is reduced to a given voltage through the transformer 24. Then the alternating current is rectified to a direct current through the rectifier 26, and the obtained direct current is supplied to the battery 28, the load 30 and the motors 42.

Under conditions in the after-mentioned Example, the output power obtained from the coreless coils 18 was 3 KW, and the power consumption in the motors 42 was 0.75 KW. Thus, a net power of 2.25 KW could be obtained.

The battery 28 is designed to store therein an excessive power when there is a power enough to spare for the motors 42 and the load 30, and discharge the stored power when the power is insufficient.

A voltage to be usually applied to the battery 28 is set at a floating charge voltage, and a small current to the extent compensating for a self-discharge is supplied to the battery 28 in the steady state.

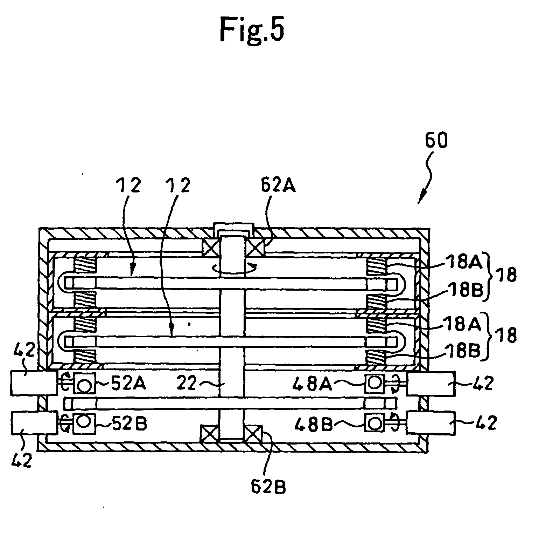

With reference to FIG. 5, a second embodiment of the present invention will be described below.

In a power generator 60 according to the second embodiment, two sets of the combinational structures, each of which includes the rotor 12 and the plurality of coreless coils 18 surrounding the rotor 12 as described in the first embodiment, are attached to the center shaft 22.

According to this structure, without excessively increasing the volume of the power generator, the two-fold increase of output power can be achieved by increasing the power or the number of the motors 42 in the torque amplifier 20.

In FIG. 5, the reference numerals 62A, 62B indicate a pair of bearings for rotatably supporting the upper and lower ends of the center shaft 22, respectively. The remaining structure is the same as that in the first embodiment illustrated in FIGS. 1 to 4. Thus, in FIG. 5, the same component or element as that in the first embodiment is defined by the same reference numeral, and its description will be omitted.

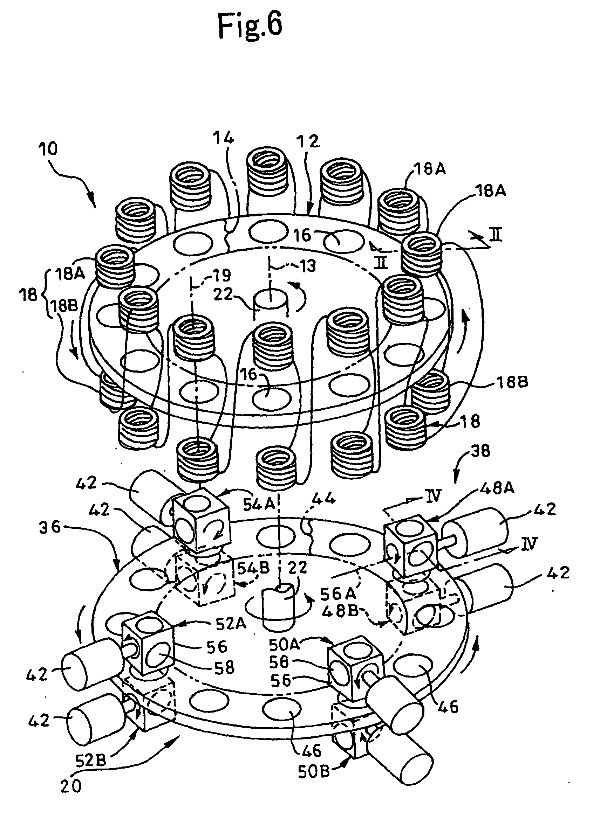

With reference to FIG. 6, a power generator 70 according to a third embodiment of the present invention will be described below.

In this power generator 70, a plurality of second coreless coils 72 are disposed, respectively, in the intervals or spaces between the coreless coils 18 in the power generator 10 according to the first embodiment. Each of the second coreless coils 72 is designed to have a turn direction opposite to that of the coreless coil 18, and to be connected in series to the adjacent permanent magnet 16.

As with the coreless coils 18, each of the second coreless coils 72 comprises a pair of shunt coils 72A, 72B which are disposed, respectively, on the upper and lower sides of the rotor 12, and connected in series with one another.

According to the power generator 70 in which the permanent magnet 16 and the second coreless coils 72 having a turn direction opposite to that of permanent magnet 16 are disposed in an alternate arrangement, when the permanent magnet 16 is passed between the shunt coils 18A, 18B of the coreless coil 18 and between the shunt coils 72A, 72B of the second coreless coil 72, the magnetic flux from the permanent magnet 16 first passing through the shunt coils 18A, 18B is increased from zero to a maximum value and then returned to zero, and the magnetic flux from the permanent magnet 16 subsequently passing through the adjacent shunt coils 72A, 72B is increased from zero to a maximum value and then reduced to zero in the opposite direction because the shunt coils 72A, 72B have a turn direction opposite to that of the shunt coils 18A, 18B.

Thus, the close/alternate arrangement of the coreless coils 18 and the second coreless coils 72 having opposite turn directions can provide a doubled output voltage.

It should be noted that when the permanent magnet 16 in this embodiment is moved from the position of the coreless coil 18 to the adjacent second coreless coil 72 or from the second coreless coil 72 to the adjacent coreless coil 18, the respective coils 18, 72 have an electromagnetic force generated in opposite directions relative to the change in magnetic flux, and thereby the electromagnetic force acts to pull the permanent magnet 16 so as to increase the rotational resistance of the rotor 12.

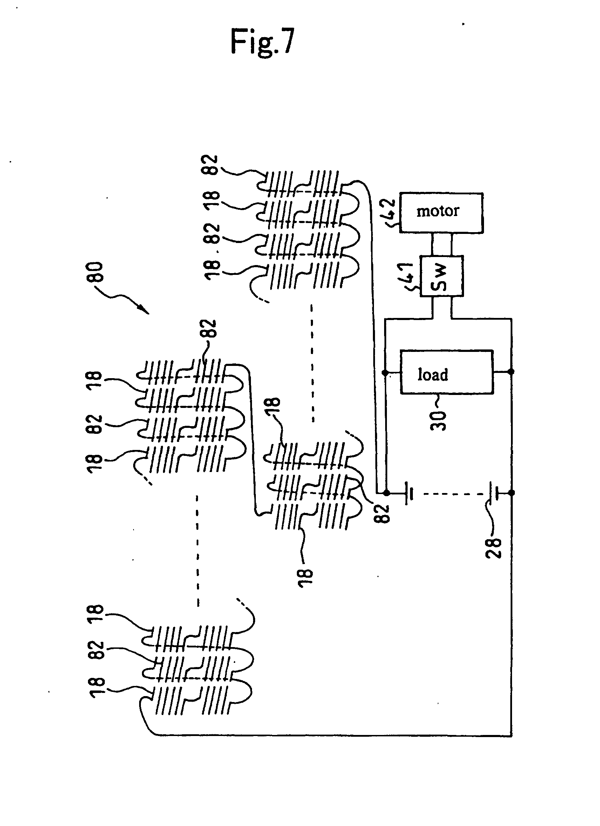

With reference to FIG. 7, a power generator 80 (its overall view is omitted) according to a third embodiment of the present invention will be described below.

While FIG. 7 shows only coreless coils, a battery and a motor, the remaining structure is the same as that of the aforementioned power generator 10 or 60, and its illustration and description will be omitted.

This power generator 80 is a DC type in which a plurality of DC coreless coils 82 are disposed, respectively, in the intervals and spaces between the coreless coils 18 in the power generator 10 illustrated in FIG. 1, and each of the DC coreless coils 82 is designed to have the same turn direction as that of the coreless coils 18, and to be connected in series to the adjacent coreless coils 18.

Thus, as seen in FIG. 7, the power generator 80 does not include any transformer and rectifier.

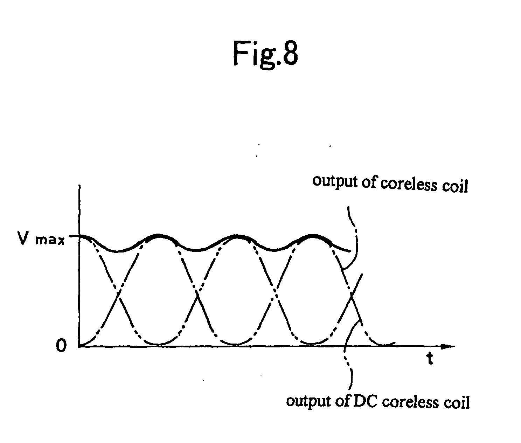

According to the arrangement in which the coreless coils 18 and the DC coreless coils 82 having the same turn direction as that of the coreless coils 18 are alternately connected in series with each other and arranged to form an annular array without any gap or space therebetween, when the permanent magnets 16 disposed intermittently in the annular zone 14 of the rotor 12 are passed through these coils, the coreless coil 18 and the DC coreless coil 82 have sine wave outputs different in phase by 180° degrees, respectively, as indicated by the one-dot chain line and two-dot chain line in FIG. 8. Thus, while a peak voltage slightly fluctuates, a pseudo-direct current as indicated by the solid line in FIG. 8 is obtained as the sum of the above two outputs.

In this embodiment, each of the permanent magnets 16 may be designed to have a size greater than that of each of the coils 18, 82, or each of the coreless coils 18 and the DC coreless coils 82 may be designed to have an outer diameter along the circumferential direction of the annular zone 14, less than that of each of the permanent magnets 16. In this case, the phase lag can be reduced to provide a DC voltage having a peak value with smaller fluctuation.

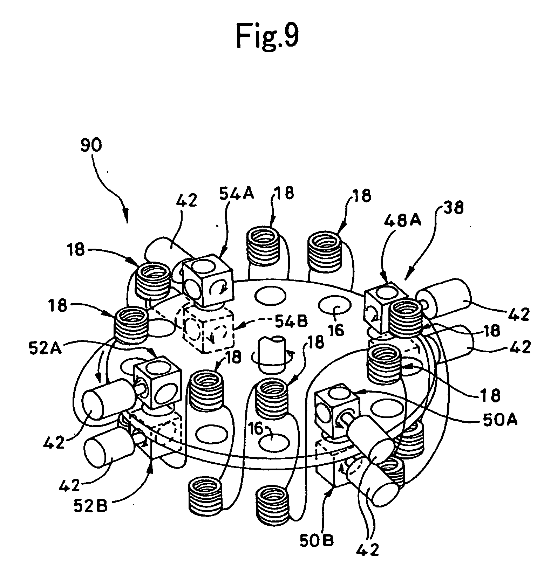

With reference to FIG. 9, a power generator 90 according to a fifth embodiment of the present invention will be described below.

In this power generator 90, each of the magnet wheel sets of the magnet wheel group 38 in the first embodiment is disposed along the periphery of the rotor 12 and between the adjacent coreless coils 18 to allow the rotor 12 to additionally serve as a driven rotor in a torque amplifier.

More specifically, the magnet wheel sets 48A, 48B; 50A, 50B; 52A, 52B; 54A, 54B of the magnet wheel group 38 are arranged such that the permanent magnets 16 attached to the annular zone 14 of the rotor 12 are sandwiched between their driving permanent magnets 58 from the opposite sides in the thickness direction of the rotor 12.

Thus, in the power generator 90, the permanent magnets 16 is rotatively driven in one direction by the driving permanent magnets 58 attached to the magnet wheels 48A to 54B, and moved between the shunt coils 18A, 18B in each of the coreless coils 18 so as to generate an electrical power in the shunt coils 18A, 18B.

While the number of the coreless coils 18 in this power generator 90 is reduced as compared with the power generator 10 in FIG. 1, the rotor 12 additionally serving as the driven rotor allows the volume of the power generator to be reduced as a whole.

Further, the permanent magnets 16 can be used for both the torque amplifier and the power generator.

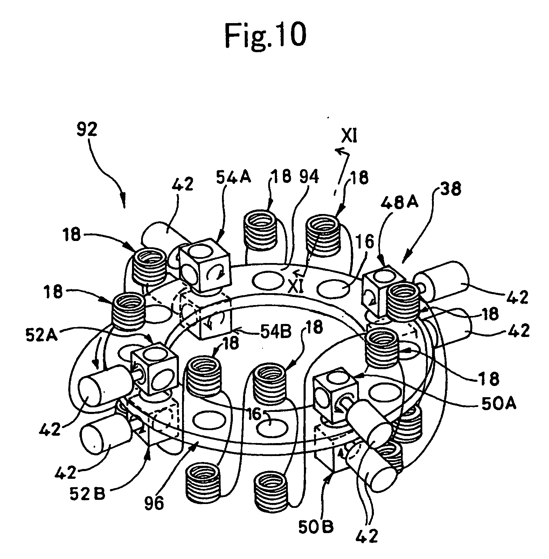

In the above case where a single rotor additionally serves as a driven rotor for a torque amplifier, and a set of permanent magnets are used for both a torque amplifier and a power generator, an annular-shaped rotor 96 including an annular zone 94 and having a shape analogous to the annular zone 94 may be used as illustrated in FIG. 10 showing a power generator 92.

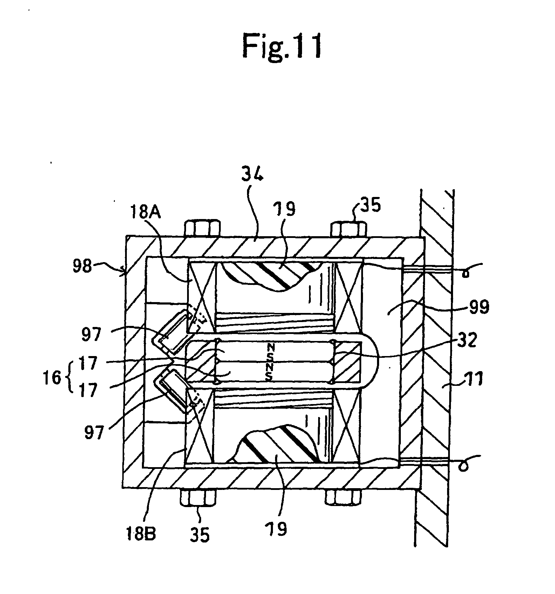

In this case, as shown in FIG. 11, an annular-shaped frame 98 corresponding to the annular-shaped frame 34 in FIG. 2 for supporting the shunt coils 18A, 18B can be formed to have a closed space 99 allowing the annular-shaped rotor 96 to penetrate therethrough.

Thus, while each of the shunt coils 18A, 18B in FIG. 2 is supported in a cantilevered manner, the annular-shaped frame 98 in FIG. 11 allows each of the shunt coils 18A, 18B to be supported at both ends thereof in the closed space 99.

Further, in the annular-shaped frame 34 in FIG. 2, it is required to set the gap between each of the shunt coils 18A, 18B and the rotor 12 at a relatively large value, because the magnetic attraction between the circular plate-shaped magnets 17 and the shunt coils 18A, 18B is likely to cause the displacement of the shunt coils 18A, 18B in a direction getting closer to the rotor 12. As a result, the magnetic flux from the circular plate-shaped magnets 17 could leak out of the shunt coils 18A, 18B.

In contrast, according to the structure in FIGS. 10 and 11 where each of the shunt coils 18A, 18B is supported at both ends thereof by the annular-shaped frame 98 having the closed space 99, the displacement of the shunt coils 18A, 18B toward the annular-shaped rotor 96 can be suppressed. Thus, the gap between each of the shunt coils 18A, 18B and the rotor 12 can be reduced to suppress the leakage of the magnetic flux.

In addition, according to the power generator 92, the annular-shaped rotor 96 can be supported in a floating manner by means of the repulsion force between the driving permanent magnets 58 of the magnet wheels and the permanent magnets 16.

Thus, the annular-shaped rotor 96 is rotatively driven almost without contact with surrounding members to achieve suppressed wearing, longer operating life and significantly reduced maintenance cost.

The reference numeral 97 in FIG. 11 indicates a roller bearing for preventing the annular-shaped roller 96 from being displaced in the thickness and radial directions beyond a given value. At least three of the roller bearings 97 are disposed along the inward periphery of the annular-shaped rotor 96 and in contact with the respective inward comers of the annular-shaped rotor 96 from an oblique direction.

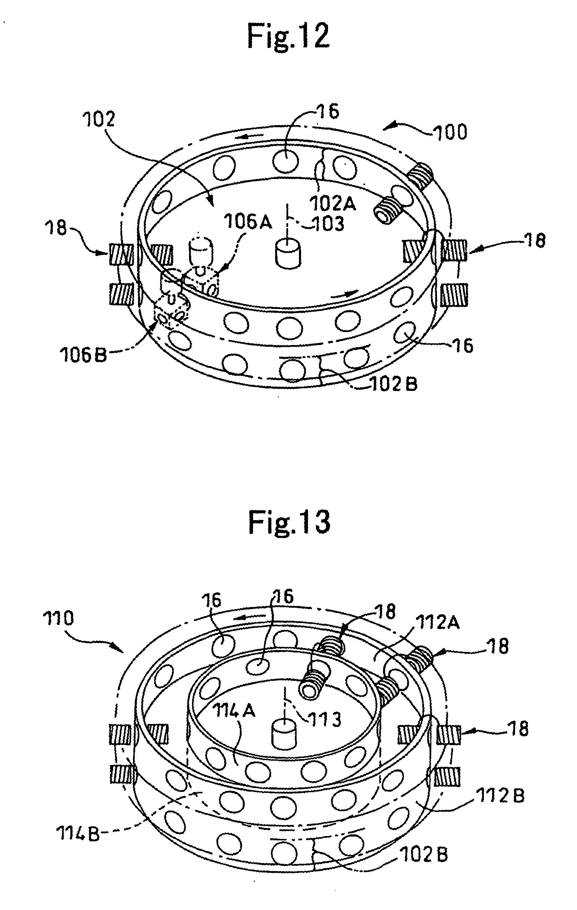

While the annular zone 14 in the first to sixth embodiments is a part of the rotor 12, and formed parallel to the rotational plane of the rotor 12, the present invention is not limited to such an annular zone 14. For example, as illustrated in FIG. 12 showing a power generator 110 according to a seventh embodiment of the present invention, the annular zone for attaching the permanent magnets thereto may be a pair of annular zones 102A, 102B formed in a rotor 102 to extend vertically relative to the rotational plane of the rotor 102.

In this case, the annular zones 102A, 102B are formed as a pair of flanges extending from the outer periphery of a disc-shaped portion of the rotor 102 at a right angle with or in the thickness direction of the disc-shaped portion in opposite directions. As with the annular zone 14 in the aforementioned power generator 10, the permanent magnets 16 are fixedly embedded in the annular zones 102A, 102B.

A plurality of coreless coils 104 (FIG. 12 shows only a part of the coreless coils) are disposed relative to the annular zones 102A, 102B and the permanent magnets 16 perpendicular to the rotational plane, in such a manner that each of the annular zones 102A, 102B is sandwiched between plural pairs of shunt coils constituting the coreless coils 104, from the inside and outside, and the pairs of shunt coils are arranged to extend radially from the rotational axis 103 of the rotor 102.

As compared with the power generator 10 in FIG. 1, the power generator 100 allows a doubled number of the permanent magnets 16 to be attached to a rotor having substantially the same size. Thus, an electrical power to be obtained is naturally doubled. Further, as compared with the power generator 60 in FIG. 5, while an electrical power to be obtained is substantially the same, the volume of the power generator can be reduced

Further, the number of the annular zones perpendicular to the rotational plane of the rotor may be increased in the radial direction to provide an increased electrical power to be obtained from a rotor having the same size.

For example, as illustrated in FIG. 13 showing a power generator 110 according to an eighth embodiment of the present invention, a first pair of annular zones 112A, 112B and a second pair of annular zones 114A, 114B having a different radius from that of the first pair are formed in a rotor 112 around the rotational axis of the rotor 112.

As compared with the power generator 100 in FIG. 12, the power generator 110 allows a power generation capacity per rotor to be approximately doubled.

As with FIG. 12, FIG. 13 shows only a part of coreless coils for the power generator 110. Further, in FIGS. 12 and 13, the illustration of a torque amplifier for the power generators 100, 110 is omitted.

If the coreless coils and the magnet wheels are disposed relative to a common rotor as in the power generators 90, 92 illustrated in FIGS. 9 and 10, a pair of magnet wheels 106 A, 106B may be disposed in such a manner as to sandwich therebetween the annular zone 102A extending vertically upward or the annular zone 102B extending vertically downward in the thickness direction thereof, as indicated by the two-dot chains line in FIG. 12. In FIG. 12, the illustration of the remaining magnet wheels is omitted.

In cases where a plurality of rotors are disposed in a superimposed manner as in the power generator 60 illustrated in FIG. 5, or a plurality of annular zones are disposed in a multistage manner as in the power generator 110 illustrated in FIG. 13, the permanent magnets and the coreless coils to be disposed adjacent to each other in the thickness direction of the rotor may be matched with each other in terms of pitch and phase to further effectively utilize the magnetic flux of the permanent magnets so as to provide enhanced power generation efficiency.

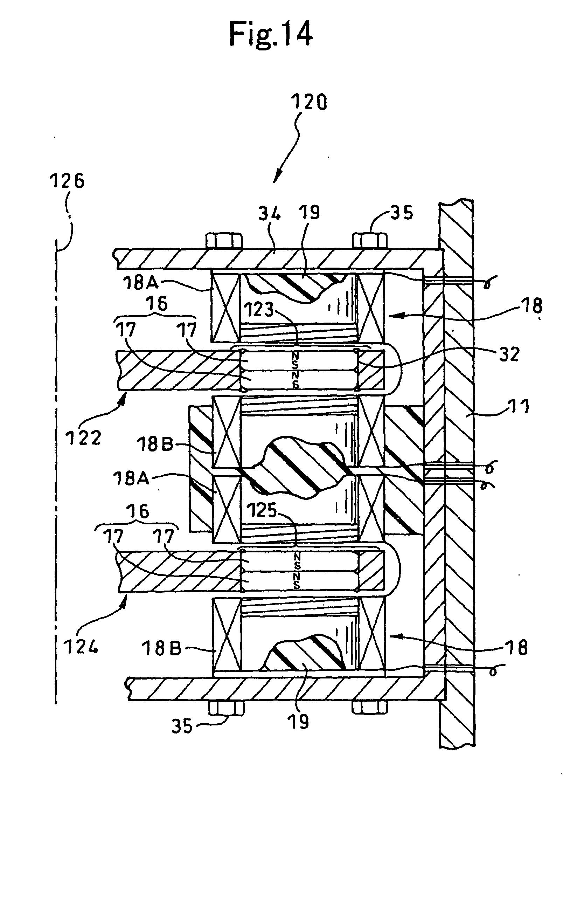

In FIG. 14 showing a power generator 120, a plurality (two in this embodiment) of rotors 122, 124 are integrally coupled together coaxially and parallel to each other. The rotors 122, 124 have annular zones 123, 125, respectively. The annular zones 123, 125 are formed to extend parallel to at least the rotational plane of each of the rotor 122, 124 and have the same radius from the rotational axis 126 of the rotors. The coreless coils 18 are disposed along the circumferential direction of the respective annular zones 123, 125 of the adjacent rotors 122, 124 at the same pitch in the same phase. The respective annular zones 123, 125 of the adjacent rotors 122, 124 are spaced apart from one another along the rotational axis by a distance slightly greater than the axial length of each of the coreless coils 18 or the sum of the respective axial lengths of the shunt coils 18A, 18B.

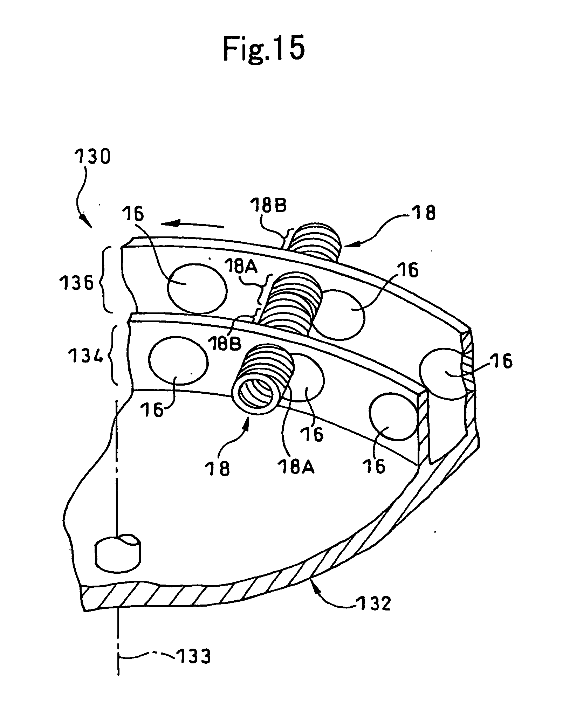

In FIG. 15 showing a power generator 130, two annular zones 134, 136 are formed in a rotor 132 to extend parallel to the rotational axis 133 of the rotor 132 around the rotational axis 133 at respective positions different in radius from the rotational axis 133. The permanent magnets 16 are disposed along the respective annular zones 134, 136 adjacent to one another in the radial direction of the rotor 132, at equiangular intervals and in the same phase in the circumferential direction of the respective annular zones 134, 136 around the rotational axis 133. The coreless coils 18 opposed to the respective annular zones 134, 136 are disposed along the circumferential direction of the respective annular zones 134, 136 at equiangular intervals and in the same phase in the circumferential direction. The adjacent annular zones 134, 136 are spaced apart from one another by a distance slightly greater than the axial length of each of the coreless coils 18.

In each of the above power generators 120, 130, the coreless coils disposed adjacent to each other in the direction of the axis of the coreless coil are arranged at the same pitch and in the same phase relative to each of the permanent magnets 16. Thus, the magnetic flux of the permanent magnet 16 can pass through not only the coreless coil directly opposed to the permanent magnet 16 but also the coreless coil adjacent thereto, to provide further enhanced power generation efficiency.

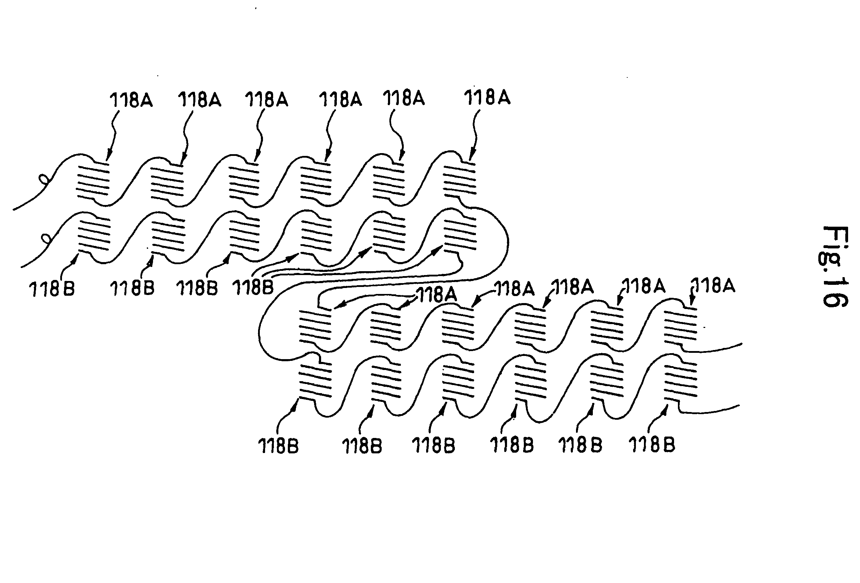

While the shunt coils in the first to tenth embodiments are designed such that the pair of shunt coils sandwiching the annular zone are connected in series with one another, the present invention is not limited to such a connection. For example, as shown in FIG. 16, a plurality of shunt coils 118A disposed on one of the sides of an annular zone is connected in series with each other, and a plurality of shunt coils 118B disposed on the other side of the annular zone is connected in series with each other. Then, an output power may be picked up parallel or serially. In this case, the need for serially connecting the pairs of shunt coils individually can be eliminated to facilitate the arrangement of the coreless coil.

Alternatively, a plurality of shunt coils may be divided into an appropriate number of groups. Then, the shunt coils in each of the groups may be connected in series with each other, and the groups may be connected in parallel with each other to obtain an output power.

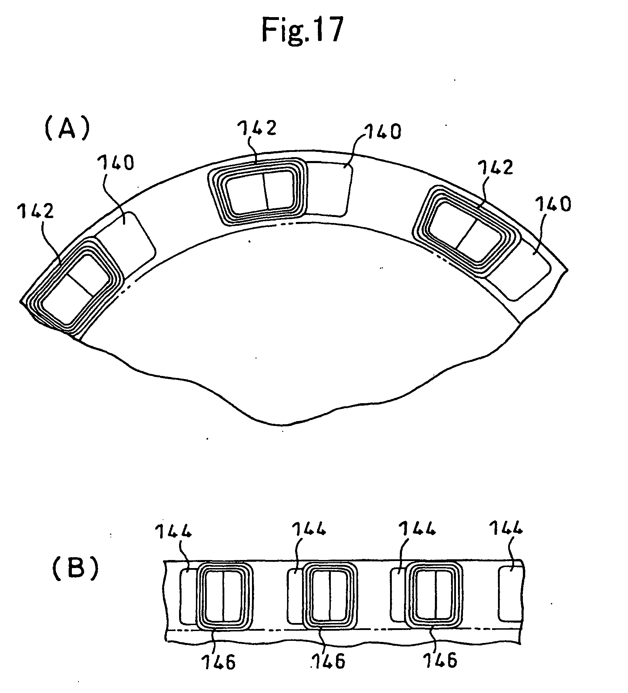

Further, while each of the permanent magnet 16, the driven permanent magnet 46 and the driving permanent magnet 58 in the above embodiments is composed of two superimposed magnets and formed in a circular shape, the present invention is not limited to such a structure or shape, but the permanent magnet may be composed of a single magnet or three or more superimposed magnets, or formed in any suitable shape, such as a rectangular or square shape or a trapezoidal shape. In particular, when the rotor has a relatively small diameter, it is preferable to use a sector-shaped permanent magnet 140 an as shown in FIG. 17(A) which is similar to a trapezoidal shape having a lower base greater than an upper base on the side of the rotational axis of the rotor. In this case, it is understood that a coreless coil 142 has a shape approximately identical to that of the permanent magnet 140. Otherwise, when the rotor has a relatively large diameter or the annular zone is formed as a flange as in FIGS. 12 and 13, a rectangular-shaped permanent magnet 144 and a rectangular-shaped coreless coil 146 as shown in FIG. 17(B) are preferably used.

Furthermore, while the power generators in the above embodiments are designed to drive the rotor through the motor-driven magnetic wheels, the present invention is not limited to such a driving mechanism. For example, each of the magnet wheels may be connected to and driven by an output shaft of any other suitable driving source, such as a wind turbine, a water turbine or an engine.

### [EXAMPLE]

Two disc-shaped aluminum rotors having a diameter of 120 cm and a thickness of 20 mm were prepared. A driven rotor for a torque amplifier was formed of an aluminum disc-shaped plate having a diameter of 120 cm and a thickness of 20 mm. Each of a plurality of permanent magnets to be attached to the rotors, the driven rotor and a plurality of magnet wheels was formed by superimposing three doughnut-shaped neodymium-based (Nd-Fe-Bo) magnets (NEOMAX available from Sumitomo Special Metals Co., Ltd.) having an outer diameter of 76 mm, an inner diameter of 42 mm and a thickness of 6 mm. The permanent magnet had magnetic characteristics including a magnetic flux density KG of 3.5 and a magnetic force of 55 Kg. An annular zone was defined in each of the rotors in such a manner that the center of the width thereof along the outer periphery of the rotor has a radius of 55 cm from the rotational axis of the rotor. 72 of the permanent magnets and 60 of permanent magnets were attached, respectively, to the annular zones in the rotor and the driven rotor, at even intervals. As with the magnet wheels in FIG. 1, eight cubic magnet wheels were prepared. Three of the doughnut-shaped permanent magnets were superimposed, and the superimposed permanent magnet set was attached to each of the four side surfaces of the cubic magnet wheel, or total 12 (3 × 4) of the permanent magnets were attached to each of the magnet wheels.

A plurality of coreless coils each having a pair of shunt coils were prepared. Each of the shunt coils had a wire diameter of 1 mm, a turn number of 1000, a coil outer diameter of 75 ϕ, and a coil axial length of 30 mm. The gap between the shunt coil and the surface of the rotor was set at 10 mm. A DC motor (available from Japan Servo Co., Ltd.) having an operating voltage of 24V, a current of 3.2 A, a power consumption of 50 W and a speed of 2000 rpm was used as each of eight motors for the magnet wheels.

The rotor and the driven rotor of the torque amplifier constructed as above were rotatively driven at a speed of 3000 rpm. As a result, an AC power output of 2 KW could be obtained from the output terminal of the coreless coils. That is, a net power output of 1.6 KW = 2 KW (power output) - 8 × 50 W (power consumption of the motors) could be obtained.

In this example, the gap between the shunt coil and the surface of the rotor was set at 10 mm, because a frame supporting the coreless coils had a low rigidity, and thereby there was the risk of the collision between the shunt coil and the rotor due to vibrations in conjunction with the switching of the magnetic attraction between the coreless coils and the permanent magnets. Thus, if the rigidity of the support frame is increased to reduce the gap, a larger output power can be obtained.

### INDUSTRIAL APPLICABILITY

The power generator and the torque amplifier according to the present invention have an excellent effect of providing an output power far greater than an input power using a permanent magnet.

## Claims

1. A power generator comprising:
a rotatable rotor adapted to be rotatively driven by an external force;
a plurality of permanent magnets disposed on said rotor, along an annular zone formed parallel to either the rotational plane or the rotational axis of said rotor and around said rotational axis, at constant intervals in the circumferential direction to form an annular array, the polarities of said permanent magnets being oriented in the same direction which is orthogonal to said annular zone; and
a plurality of coreless coils supported by a stationary member and disposed along said annular zone to form an annular array such that the axes of said coils intersect with said annular zone,
wherein:
said annular zone in said rotor is formed of a nonmagnetic material; and
each of said coreless coils consists of a pair of shunt coils disposed such that said pair of shunt coils sandwich the orbital plane of said permanent magnets formed by the rotation of said rotor therebetween, from the both sides of the polar direction with a gap, said pair of shunt coils having the same turn direction.

2. The power generator as defined in claim 1, wherein said pair of shunt coils are connected in series with one another.

3. The power generator as defined in claim 1, wherein the shunt coils of said coreless coil disposed on one of the opposite sides relative to said orbital plane are connected in series with each other.

4. The power generator as defined in either one of claims 1 to 3, wherein said annularly arrayed permanent magnets are arranged along the circumferential direction of said annular zone at a pitch (Pm) two times or more greater than the outer diameter (Dm) of each of said permanent magnets along said circumferential direction.

5. The power generator as defined in either one of claims 1 to 4, wherein the outer diameter (Dc) of each of said annularly arrayed coreless coils along the circumferential direction of said annular zone is approximately equal to the outer diameter (Dm) of each of said permanent magnets.

6. The power generator as defined in either one of claims 1 to 5, wherein said annularly arrayed coreless coils are arranged at constant intervals along the circumferential direction of said annular zone, and wound in the same turn direction, wherein the interval between the adjacent coreless coils is set at a value selected from the group consisting of 1 to 1.4 times, 1.1 to 1.3 times and 1.2 times of the outer diameter (Dc) of each of said coreless coils along said circumferential direction.

7. The power generator as defined in either one of claims 1 to 5, wherein said coreless coils are provided in an even number, wherein outer-diameter portions of the adjacent coreless coils along the circumferential direction of said annular zone are disposed in close contact with one another, and the adjacent coreless coils have opposite turn directions.

8. The power generator as defined in either one of claims 1 to 5, wherein said coreless coils are provided in an even number, wherein outer-diameter portions of the adjacent coreless coils along the circumferential direction of said annular zone are disposed in close contact with one another, and the adjacent coreless coils have the same turn direction.

9. The power generator as defined in either one of claims 1 to 8, wherein said annular zone is formed in said rotor in a plural number at respective positions different in radius from the rotational axis of said rotor, wherein:
said permanent magnets are disposed along each of said plurality of annular zones at constant intervals in the circumferential direction of said rotor to form a plurality of annular arrays, while uniformly orienting their polarities in a direction orthogonal to said corresponding annular zones; and
said coreless coils are disposed relative to said plural annular arrays of permanent magnets to form a plurality of annular arrays.

10. The power generator as defined in claim 9, wherein at least one of said annular zones is formed parallel to the rotational plane of said rotor, and the remaining annular zones are formed parallel to the rotational axis of said rotor.

11. The power generator as defined in either one of claims 1 to 10, wherein said annular zone in said rotor has a thickness approximately equal to the thickness of each of said permanent magnets in the polar direction thereof, and each of said permanent magnets is fitted into and supported by a through-holes formed in said annular zone in its thickness direction.

12. The power generator as defined in either one of claims 1 to 11, wherein said rotor is provided in a plural number, wherein:
said plurality of rotors are integrally coupled coaxially and parallel to each other;
said annular zone is formed in each of said rotors to extend parallel to at least the rotational plane of each of said rotors and have the same radius from the rotational axis of said rotors;
said coreless coils are disposed along the circumferential direction of the respective annular zones of the adjacent rotors at the same pitch in the same phase; and
the respective annular zones of the adjacent rotors are spaced apart from one another along said rotational axis by a distance slightly greater than the axial length of each of said coreless coils.

13. The power generator as defined in either one of claims 1 to 11, wherein said annular zone is formed in said rotor in a plural number to extend parallel to the rotational axis of said rotor at respective positions different in radius from said rotational axis, wherein:
said permanent magnets are disposed along the respective annular zones adjacent to one another in the radial direction of said rotor, at equiangular intervals and in the same phase in the circumferential direction of said respective annular zones around said rotational axis;
said coreless coils are disposed opposed to said respective annular zones and along the circumferential direction of said respective annular zones, at equiangular intervals and in the same phase in said circumferential direction; and
the adjacent annular zones are spaced apart from one another by a distance slightly greater than the axial length of each of said coreless coils.

14. A torque amplifier comprising:
a rotatably driven rotor;
a plurality of driven permanent magnets disposed on said driven rotor, along an annular zone formed parallel to either the rotational plane or the rotational axis of said rotor and around said rotational axis, at constant intervals in the circumferential direction to form an annular array, the polarities of said permanent magnets being oriented in the same direction which is orthogonal to said annular zone;
a group of magnet wheels including a plurality sets of magnet wheels disposed along the circumferential direction of said driven rotor, each of said sets of magnet wheels is a pair of magnet wheels rotatable in the rotation direction of said driven permanent magnets and disposed such that said pair of magnet wheels sandwich the orbital plane of said driven permanent magnets formed by the rotation of said driven rotor therebetween, from the both sides of the polar direction with a gap; and
a driving source for rotatively driving said magnet wheels of said magnet wheel group in a synchronous manner,
wherein:
said annular zone in said driven rotor is formed of a nonmagnetic material; and
said magnet wheel includes a rotating member rotatable around a rotational axis parallel to the annular zone of said driven rotor and orthogonal to the circumferential direction of said annular zone, and a plurality of driving permanent magnets attached to the outer periphery of said rotating member at even intervals in the rotation direction of said rotating member and such that the polarities thereof have the same direction relative to the rotational axis of said rotating member, and said magnet wheel is disposed such that said driving permanent magnets and said driven permanent magnets have the same polarity at the opposing surfaces.

15. The torque amplifier as defined in claim 14, wherein said driving permanent magnets are a plurality of plate-shaped bodies disposed in the outer periphery of said rotating member point-symmetrically around the rotational axis of said rotating member, each of said plate-shaped bodies being attached to said rotating member in such a manner that the closest distance between the leading edge of said plate-shaped body in the rotation direction of said rotating member and the orbital plane of said driven permanent magnets is greater than the closest distance between the trailing edge of said plate-shaped body in said rotation direction and said orbital plane.

16. The torque amplifier as defined in claim 14 or 15, wherein said plurality of magnet wheel sets are disposed at equiangular intervals in the circumferential direction of said driven rotor.

17. The torque amplifier as defined in either one of claims 14 to 16, wherein said driving source is a plurality of motors having the same number as that of said magnet wheels to drive the respective magnet wheels individually

18. The torque amplifier as defined in either one of claims 14 to 17, wherein each of said driven permanent magnets includes a plurality of plate-shaped magnets magnetically attached to each other in a superimposed manner.

19. The power generator as defined in either one of claims 1 to 13, which includes an input power shaft integral and coaxial with said rotor, said input power shaft being coupled to an output power shaft rotatable integrally and coaxially with said driven rotor of the torque amplifier as defined in either one of claims 14 to 18.

20. The power generator as defined in either one of claims 1 to 13, which includes:
a magnet wheel group including a plurality of magnet wheel sets each attached to said stationary member at a position between the adjacent annularly arrayed coreless coils, each of said magnet wheel sets being composed of a pair of magnet wheels which are designed to be rotatable in the rotation direction of said permanent magnets and aligned along the polar direction of said permanent magnets in such a manner as to sandwich therebetween the orbital plane of said permanent magnets rotated in conjunction with the rotation of said rotor, from the opposite sides of said orbital plane; and
a driving source for rotatively driving said magnet wheels of said magnet wheel group in a synchronous manner,
wherein:
each of said magnet wheels includes a rotating member parallel to the annular zone of said rotor and rotatable around a rotational axis orthogonal to the circumferential direction of said annular zone, and a plurality of driving permanent magnets attached to the outer periphery of said rotating member at even intervals in the rotation direction of said rotating member while uniformly orienting their polarities along the rotational axis of said rotating member,
wherein each of said driving permanent magnets and the corresponding permanent magnet of said rotor are disposed in such a manner that the opposed surfaces thereof have the same polarity.

21. The power generator as defined in claim 20, wherein said rotor is formed of an annular body having a shape approximately analogous to that of said annular zone, and said stationary member includes a frame supporting said coreless coils and having a closed space allowing said annular body to penetrate therethrough.

22. The power generator as defined in claim 20 or 21, wherein said driving permanent magnets are a plurality of plate-shaped bodies disposed in the periphery of said rotating member point-symmetrically around the rotational axis of said rotating member, each of said plate-shaped bodies being attached to said rotating member in such a manner that the closest distance between the leading edge of said plate-shaped body in the rotation direction of said rotating member and the orbital plane of said driving permanent magnets is greater than the closest distance between the trailing edge of said plate-shaped body in said rotation direction and said orbital plane.

23. The power generator as defined in either one of claims 20 to 22, wherein said plurality of magnet wheel sets are disposed at equiangular intervals in the circumferential direction of said rotor.

24. The power generator as defined in either one of claims 20 to 23, wherein each of said driving permanent magnets includes a plurality of plate-shaped magnets magnetically attached to each other in a superimposed manner.

25. The power generator as defined in either one of claims 20 to 24, which includes:
a rectifier connected to an output terminal of said coreless coils to rectify a part or all of an output current from said output terminal; and
a battery adapted to be charged with a DC power supplied from said rectifier,
wherein said driving source is a motor adapted to be supplied with a power from said battery.
